# EUROPEAN PATENT APPLICATION

(11) **EP 4 809 862 A1**
(43) Date of publication of application: **23.09.2026**
(21) Application number: 25178139.9
(22) Date of filing: 22.05.2025
(51) Int. Cl.: A46D 3/00, A46B 3/04, A46B 3/08, A46B 9/02

(54) **GLUE-FREE INTEGRALLY-FORMED MAKEUP BRUSH AND PREPARATION THEREOF**

(30) Priority: 21.03.2025 CN 202510342770
(71) Applicant: Beauty Yaurient Cosmetics Accessories (Shenzhen) Co., Ltd., Shenzhen, Guangdong 518129 (CN)
(72) Inventor: LIN, Yuju, Shenzhen (CN)
(74) Representative: Vitina, Maruta

(57) **Abstract**

A glue-free integrally-formed makeup brush includes a handle and a brush head assembly integrally formed. The brush head assembly includes a bristle cluster, a sleeve and a plug. A root of the bristle cluster is provided with at least two protrusions, and a first groove is provided between adjacent protrusions. A first end of the sleeve is connected with the handle, and an inner wall of a second end of the sleeve is provided with an annular boss. An end surface of the annular boss facing towards the handle is provided with at least two bearing bosses, and a second groove is provided between adjacent two bearing bosses. The protrusions are engaged with the second groove, and the bearing bosses are engaged with the first groove.

## Description

### TECHNICAL FIELD

This application relates to makeup tools, in particular to a glue-free integrally-formed makeup brush and a preparation thereof.

### BACKGROUND

A glue-free process is generally adopted in the production of the existing makeup brushes to satisfy the requirements of environmental protection. A flared skirt edge is formed at the root of the bristle cluster, and is inserted into the handle, as shown in Fig. 7 of Chinese Patent Publication No. 113271810A). However, such assembly method will make the bristle cluster prone to detachment from the handle, thereby affecting its service life. In order to enhance the connection reliability between the bristle cluster and the handle, a connecting piece is introduced to connect the bristle cluster with the. For example, during the assembly process of a glue-free makeup brush disclosed by Chinese Patent No. 219069671U, the flared skirt edge of a bristle assembly is clamped into multiple elastic pieces of a sleeve, and in this process, the elastic pieces are forced to be away from each other to widen an mounting slot. After the flared skirt edge enters the mounting slot, the elastic pieces reset to narrow the mounting slot. Then a connecting structure is adopted to fix the sleeve to the handle, and force the elastic pieces to be close to each other to hold the bristle assembly. Chinese Patent Publication No. 116649710A developed a makeup brush including bristles, a mounting piece and a clamping assembly. The clamping assembly includes a first clamp and a second clamp. The first clamp and the second clamp are connected to form an enclosed structure, and an upper end of the first clamp and an upper end of the second clamp are each provided with a groove, such that a mounting slot is enclosed by two grooves. The mounting piece is clamped in the mounting slot, and a brush head can be mounted on the clamping assembly without using glue. However, such makeup brush has defects of excessive components, complex assembly, poor assembly stability and high cost.

### SUMMARY

In view of this, it is necessary to provide a makeup brush to solve the above problems.

A glue-free integrally-formed makeup brush is provided, comprising:
a handle; and
a brush head assembly;
wherein the brush head assembly and the handle are integrally formed through injection molding;
the brush head assembly comprises bristles, a sleeve and a plug; roots of the bristles are circumferentially provided with at least two protrusions spaced apart each other, and a first groove is provided between adjacent two of the at least two protrusions; and a first end of the sleeve is connected with the handle, and an inner wall of a second end of the sleeve is provided with an annular boss;
a surface end of the annular boss facing towards the handle is circumferentially provided with at least two bearing bosses, and a second groove is provided between adjacent two of the at least two bearing bosses; and the at least two protrusions engage with the second groove, and the at least two bearing bosses engage with the first groove; and
the plug is embedded in the sleeve, and the plug is in zero-clearance fit with the sleeve; and the at least two protrusions are clamped between the plug and the annular boss.

In an embodiment, the at least two bearing bosses have equal height along an axial direction of the sleeve.

In an embodiment, a circumferential length of the second groove is larger than that of each of the at least two bearing bosses; and a circumferential length of each of the at least two protrusions is larger than that of the first groove.

In an embodiment, the number of the second groove is four; the number of the at least two bearing bosses is four; the number of the at least two protrusions is four; and the number of the first groove is four.

In an embodiment, an end of the plug facing towards the handle is provided with a buffer cone; an external diameter of a bottom of the buffer cone is smaller than a diameter of the plug; the buffer cone and an inner wall of the sleeve form a buffer chamber; and an end of the handle is configured to extend into the buffer chamber.

In an embodiment, the buffer cone is configured to extend out of the sleeve.

In an embodiment, a top of the buffer cone is arched.

A method for preparing the makeup brush is provided, comprising:
(S1) extending the bristles from an end of the sleeve away from the annular boss into the sleeve;
(S2) embedding the plug into the sleeve, and clamping the bristles in the sleeve through the plug to form the brush head assembly;
(S3) placing the brush head assembly into a first mold;
(S4) closing the first mold and a second mold, and forming the handle through injection molding;
(S5) removing the first mold and the second mold to obtaining the makeup brush.

In an embodiment, step (S1) comprises:
wrapping a thin sheet with a tip around the bristles, so that the roots of the bristles face away from the tip of the thin sheet; aligning the tip of the thin sheet with the end of the sleeve away from the annular boss, so that the tip of the thin sheet enters the sleeve from the end of the sleeve away from the annular boss to drive the bristles to extend from the annular boss; and removing the thin sheet, and adjusting the bristles, so that the at least two protrusions engage with the second groove, and the at least two bearing bosses engage with the first groove.

In an embodiment, the method further comprises a step before step (S3), wherein the step before step (S3) comprises:
placing the brush head assembly into a clamp; and placing the clamp into the first mold;
wherein the clamp is provided with a cylindrical cavity for accommodating the brush head assembly, and a retaining ring is provided in the cylindrical cavity to support the brush head assembly; and
the step of placing the brush head assembly into a clamp comprises: wrapping the thin sheet with the tip around the bristles, so that the roots of the bristles face away from the tip of the thin sheet; aligning the tip of the thin sheet with the end of the sleeve away from the annular boss, so that the tip of the thin sheet enters the sleeve to drive the bristles to extend from one side of the retaining ring to another side of the retaining ring, and the annular boss abuts against the retaining ring.

The present disclosure has the following beneficial effects.

The present disclosure provides the glue-free integrally-formed makeup brush. The at least two protrusions are clamped between the plug and the annular boss to form the brush head assembly. Then the brush head assembly is connected with the handle through injection molding to form the makeup brush. The makeup brush has advantages of less components, simple production, less steps and reliable assembly, which eliminates the need of glue bonding, and is more environmentally friendly.

### BRIEF DESCRIPTION OF THE DRAWINGS

In order to illustrate the technical solutions of this application or the prior art more clearly, the accompanying drawings required in the description of embodiments or the prior art will be briefly introduced below. It is obvious that the following accompanying drawings only show some embodiments of this application, and for those of ordinary skill in the art, other relevant accompanying drawings can also be obtained according to these drawings without making creative effort.
Fig. 1 is a structural diagram of a makeup brush according to an embodiment of the present disclosure.
Fig. 2 is an exploded view of the makeup brush according to an embodiment of the present disclosure.
Fig. 3 is an exploded view of a brush head assembly of the makeup brush according to an embodiment of the present disclosure.
Fig. 4 is a structural diagram of the brush head assembly according to an embodiment of the present disclosure.
Fig. 5 is a sectional view of the brush head assembly in Fig. 4 along an A-A line.
Fig. 6 is a structural diagram of a sleeve according to an embodiment of the present disclosure.
Fig. 7 is a sectional view of the sleeve in Fig. 6 along a B-B line.
Fig. 8 is a top view of the sleeve according to an embodiment of the present disclosure.
Fig. 9 is a top view of a bristle cluster assembled in the sleeve according to an embodiment of the present disclosure.
Fig. 10 is a structural diagram of a handle according to an embodiment of the present disclosure.
Fig. 11 is a front view of a clamp according to an embodiment of the present disclosure.
Fig. 12 is a sectional view of the clamp in Fig. 11 along a C-C line.
Fig. 13 is a structural diagram of the clamp according to an embodiment of the present disclosure.
Fig. 14 is a structural diagram of a thin sheet according to an embodiment of the present disclosure.

In the figures: 100, makeup brush; 1, handle; 2, brush head assembly; 3, bristle cluster; 31, root; 4, protrusion; 41, first groove; 5, sleeve; 51, annular boss; 52, bearing boss; 53, second groove; 54, buffer chamber; 6, plug; 7, buffer cone; 71, top; 72, bottom of the buffer cone; 8, buffer boss; 9, accommodating chamber; 10, slot; 11, clamp; 12, retaining ring; 13, cylindrical cavity; and 14, thin sheet.

The present disclosure will be described in detail below with reference to the embodiments and accompanying drawings to make technical solutions, objects and advantages of the present disclosure clearer.

### DETAILED DESCRIPTION OF EMBODIMENTS

The technical solutions of the embodiments of the present disclosure will be clearly and completely described with reference to the accompanying drawings of the embodiments of the present disclosure. It is obvious that described herein are only some embodiments of the present disclosure, rather than all embodiments. Based on the embodiments of the present disclosure, other embodiments obtained by those of ordinary skill in the art without making creative effort shall fall within the scope of the present disclosure.

It should be noted that the terms, such as "up", "down", "left", "right", "front", "rear" and other directional indications used herein, are only used for illustrating relative position relationship and motion between components in a specific state (as shown in the accompanying drawings). If the specific state changes, the directional indication accordingly changes.

In addition, the terms "first" and "second" are only used for distinguishment rather than indicating or implying the relative importance or implicitly specifying the number of technical features indicated. Therefore, a feature defined with "first" or "second" may explicitly or implicitly indicates the inclusion of at least one of such features. Besides, the term "and/or" used herein includes three solutions, for example, "A" and/or "B" includes solution "A", solution "B", and a combination thereof. Technical solutions of embodiments can be combined with each other as long as the combined solution can be implemented by those skilled in the art. When a combination of the technical solutions is contradictory or cannot be realized, it should be considered that such a combination does not exist, and is not within the scope of the present disclosure.

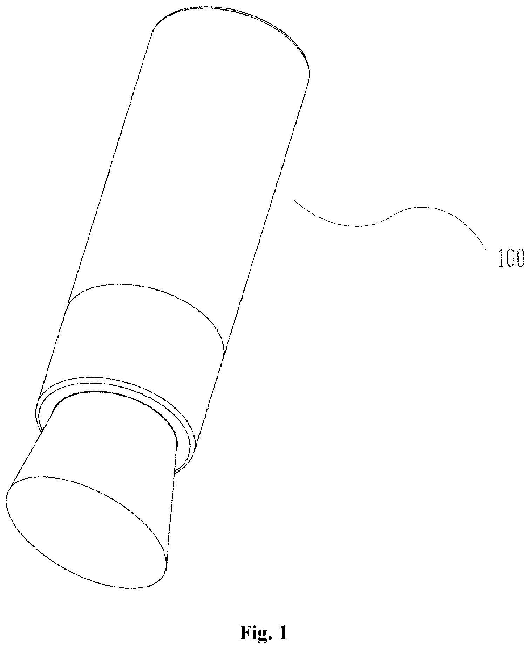

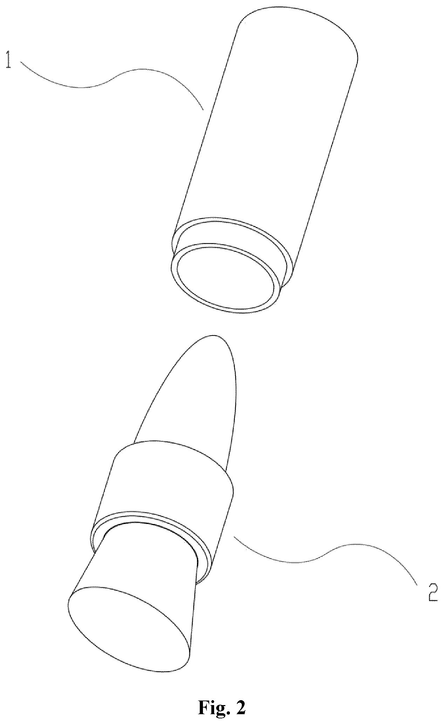

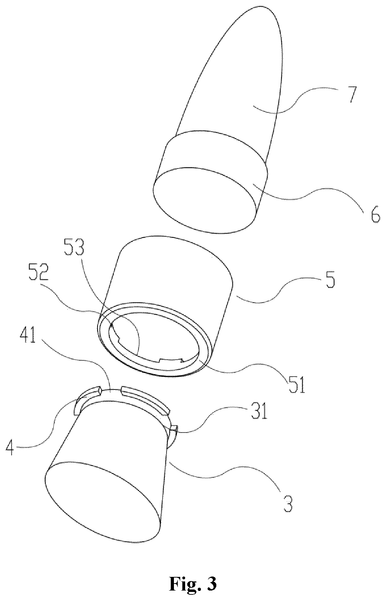

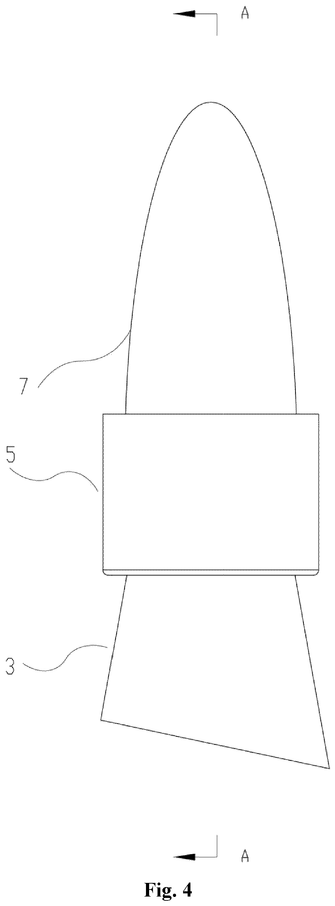

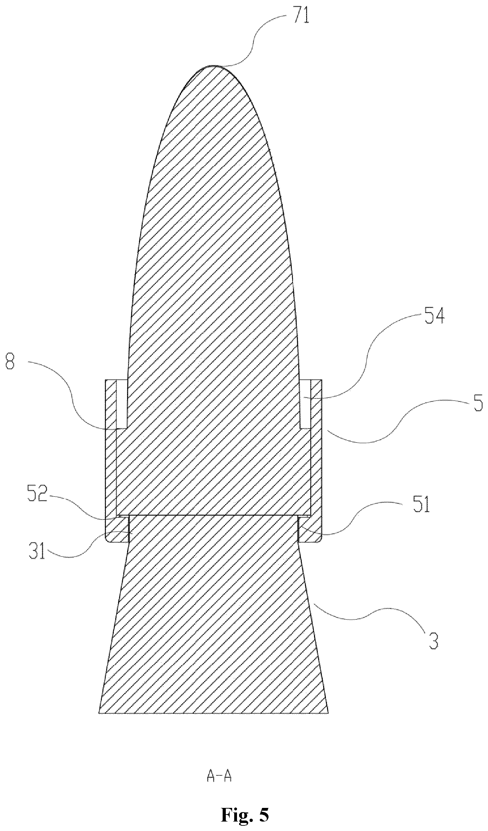

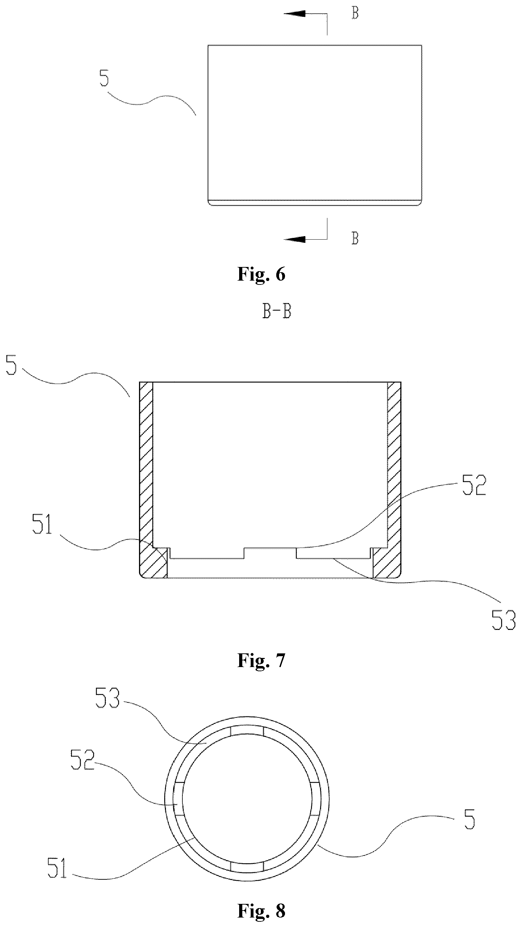

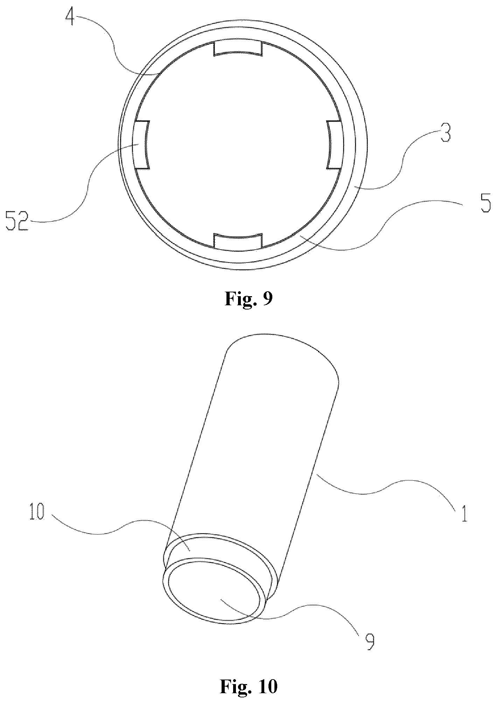

Referring to Figs. 1-10, a glue-free integrally-formed makeup brush 100 is provided. The makeup brush 100 includes a handle 1 and a brush head assembly 2. The brush head assembly 2 and the handle 1 are integrally formed through injection molding. The brush head assembly 2 includes bristles 3, a sleeve 5 and a plug 6. Roots 31 of the bristles 3 are circumferentially provided with at least two protrusions 4 spaced apart each other, and a first groove 41 is provided between adjacent two of the at least two protrusions 4. A first end of the sleeve 5 is connected with the handle 1, and an inner wall of a second end of the sleeve 5 is provided with an annular boss 51. A surface end of the annular boss 51 facing towards the handle 1 is circumferentially provided with at least two bearing bosses 52, and a second groove 53 is provided between adjacent two of the at least two bearing bosses 52. The at least two protrusions 4 engage with the second groove 53, and the at least two bearing bosses 52 engage with the first groove 41. The plug 6 is embedded in the sleeve 5, and the plug 6 is in zero-clearance fit with the sleeve 5. The at least two protrusions 4 are clamped between the plug 6 and the annular boss 51.

In this embodiment, the at least two protrusions 4 engage with the second groove 53, and the at least two bearing bosses 52 engage with the first groove 41. The east two protrusions 4 are clamped between an end of the plug 6 and the annular boss 51 to form the brush head assembly 2. Then the brush head assembly 2 and the handle 1 are integrally formed through injection molding to obtain the makeup brush. The makeup brush has advantages of less components, simple production, less steps and reliable assembly.

In this embodiment, the handle 1, the bristles 3, the sleeve 5 and the plug 6 are each made of a recyclable material or a degradable material selected from the group of polylactic acid (PLA), polyethylene terephthalate (PET), polybutylene terephthalate (PBT) and a combination thereof. In an embodiment, the bristles 3 and the handle 1, the sleeve 5 and the plug 6 are made of different materials, for example, the bristles 3 are made of PBT, and the handle 1, the sleeve 5 and the plug 6 are each made of PET. In an embodiment, the handle 1, the bristles 3, the sleeve 5 and the plug 6 are made of the same material.

During the injection molding, if a molten material of the handle 1 reaches above 200 °C, part of the bristles 3 or all of the bristles 3 will deform. In the present disclosure, the at least two protrusions 4 are clamped between the plug 6 and the annular boss 51, and the plug 6 is configured to avoid melting and deformation of the bristles 3 caused by direct action of the molten material of the handle 1 on the bristles 3 during the injection molding. In the process of the injection molding, the injection molding is performed at a set pressure above 30 Bar and an injection pressure about 100 Mpa. Such strong pressure acts on the plug 6 to break or partially break the at least two protrusions 4. The present disclosure provides the at least two bearing bosses 52 to support the plug 6, so as to prevent the bristles 3 from removing or easily removing from the sleeve 5 caused by injection pressure compact of the plug 6 breaks or partially breaks the at least two protrusions 4 during the injection molding.

In this embodiment, the at least two bearing bosses 52 have equal height along an axial direction of the sleeve 5. A circumferential length of the second groove 53 is larger than that of each of the at least two bearing bosses 52. A circumferential length of each of the at least two protrusions 4 is larger than that of the first groove 41. In this way, the bristles 3 is firmly clamped in the sleeve 5, preventing the bristles 3 from being removed from the sleeve 5 caused by easy deformation of the at least two protrusions 4 during use. In this embodiment, a height of each of the at least two bearing bosses 52 is equal to or slightly smaller than that of each of the at least two protrusions 4, so that the plug 6 and the annular boss 51 apply a certain pressing force on the at least two protrusions 4, which further prevents the bristles 3 from being removed from the sleeve 5 caused by easy deformation of the at least two protrusions 4 during use.

In an embodiment, the number of the second groove 53 is three or four, the number of at least two bearing bosses 52 is three or four, the number of the at least two protrusions 4 is three or four, and the number of the first groove 41 is three or four. In this embodiment, the at least two protrusions 4 are provided evenly spaced apart each other along the roots 31 of the bristles 3. The at least two bearing bosses 52 are provided evenly spaced apart each other facing towards the end surface of the handle 1 along the annular boss 51. Excessive protrusions 4 will cause that the size of a single protrusion 4 is too small, and thus it fails to offer sufficient strength. In this case, the protrusions 4 are prone to deformation during the use, and the bristle cluster 3 will be separated from the sleeve 5. The insufficient number or size of the bearing bosses 52 will cause that the bearing bosses 52 fail to provide sufficient support to withstand the injection pressure applied to the plug 6 during the injection molding process, such that the protrusions 4 are broken or partially broken, thereby leading to the detachment of the bristle cluster 3 from the sleeve 5.

In an embodiment, an end of the plug 6 facing towards the handle 1 is provided with a buffer cone 7. An external diameter of a bottom of the buffer cone 7 is smaller than a diameter of the plug 6. The diameter of the plug 6 is equal to that of an inner wall of the sleeve 5, so that the plug 6 is in zero-clearance fit with the sleeve 5. It should be noted that, the diameter of the plug 6 can also be slightly larger than that of the inner wall of the sleeve 5, so that the plug 6 is in interference fit with the sleeve 5. The plug 6 is connected with a bottom of the buffer cone 72 to form a buffer boss 8. The buffer cone 7 and the inner wall of the sleeve 5 form a buffer chamber 54. The molten material of the handle 1 is configured to form an end of the handle 1 to extend into the buffer chamber 54 during the injection molding. The end of the handle 1 is configured to foam a slot 10 that is compatible with the buffer chamber 54, so that the connection between the handle and the sleeve 5 is firmer.

In this embodiment, the buffer cone 7 is configured to extend out of the sleeve 5. The end of the handle 1 is provided with an accommodating chamber 9, the buffer cone 7 is configured to extend into the accommodating chamber 9. In an embodiment, the buffer cone 7 does not extend out of the sleeve 5, and a length of the sleeve 5 accordingly increases.

In an embodiment, a top 71 of the buffer cone 7 is arched. In this embodiment, the buffer cone 7 as a whole is configured as a parabolic structure of revolution. In this way, a buffer ability of the buffer cone 7 during the injection molding is further enhanced.

The present disclosure also provides a method for preparing the makeup brush including the following steps.

(S1) The bristles 3 are extended into the sleeve 5 from an end of the sleeve 5 away from the annular boss 51.

In this embodiment, the bristles 3 are prepared through the following steps: the roots 31 of the bristles 3 are molten to form a plate with a width wider than that of the roots 31, so as to form the at least two protrusions 4.

In an embodiment, step (S1) is performed through the following step.

A thin sheet 14 with a tip is wrapped around the bristles 3, so that the roots of the bristles 3 face away from the tip of the thin sheet 14. The tip of the thin sheet 14 is aligned with the end of the sleeve 5 away from the annular boss 51, so that the tip of the thin sheet 14 enters the sleeve 5 from the end of the sleeve away from the annular boss 51 to drive the bristles 3 to extend from the annular boss 51. The thin sheet 14 is removed, and the bristles 3 is adjusted, so that the at least two protrusions 4 engage with the second groove 53, and the at least two bearing bosses 52 engage with the first groove 41. The thin sheet 14 with the tip is wrapped around the bristles 3, so that the bristles 3 is tightened to not be blocked by the sleeve 5, and the bristles 3 can enter the sleeve 5 from the end of the sleeve 5 away from the annular boss 51. The at least two protrusions 4 is configured to be clamped to the annular boss 51 rather than being forced to clamp into from an end of the sleeve 5 close to the annular boss 51, which may cause damage of the at least two protrusions 4.

(S2) The plug 6 is embedded into the sleeve 5, and the bristles 3 are clamped in the sleeve 5 through the plug 6 to form the brush head assembly 2.

(S3) The brush head assembly 2 is placed into a first mold.

A step before step (S3) is performed through the following steps.

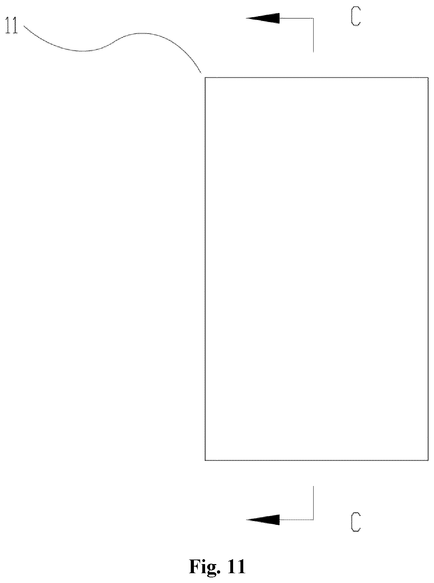

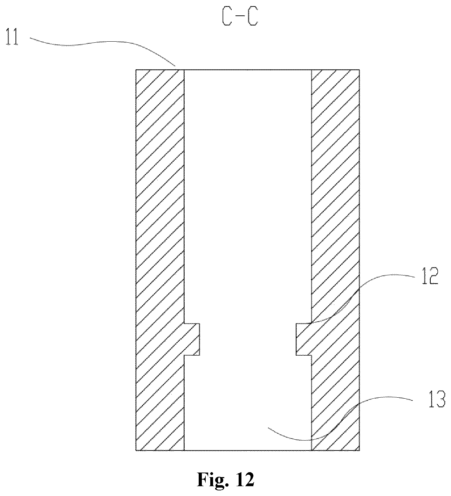

(S31) The brush head assembly 2 is placed into a clamp 11. The clamp 6 is placed into the first mold. Referring to Figs. 11-13, the clamp 11 is provided with a cylindrical cavity 13 for accommodating the brush head assembly 2, and a retaining ring 12 is provided in the cylindrical cavity 13 to support the brush head assembly 2.

Step (S31) is performed through the following steps.

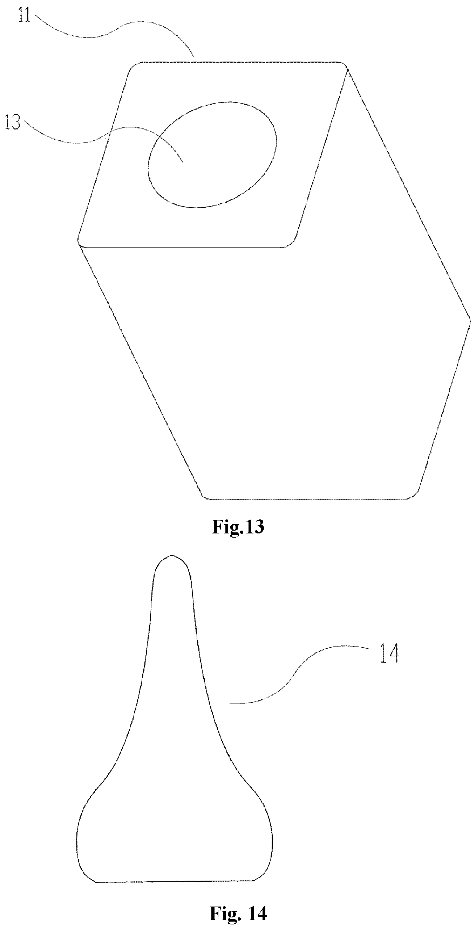

The thin sheet 14 with the tip is wrapped around the bristles 3, so that the bristles 3 face away from the tip of the thin sheet 14. The tip of the thin sheet 14 is aligned with an end of the cylindrical cavity 13, so that the tip of the thin sheet 14 enters the clamp to drive the bristles 3 to extend from one side of the retaining ring 12 to another side of the retaining ring 12, and the end surface of the sleeve 5 abuts against the retaining ring 12. The bristles 3 is located in the cylindrical cavity 13, and the buffer cone 7 faces towards a second mold. In this embodiment, referring to Fig. 14, an end of the thin sheet 14 is larger than another end of the thin sheet 14, and the tip of the thin sheet 14 refers to the smaller one. In this end, the thin sheet 14 is a plastic sheet.

(S4) The first mold and the second mold are closed, and the handle 1 is formed through the injection molding, where the brush head assembly 2 and the handle are in integrally formed through the injection molding. In this embodiment, the first mold is configured as a male die, and the second mold is configured as a female die. The second mold is provided with a mold cavity of the handle 1.

(S5) The first mold and the second mold are removed to obtain the glue-free integrally-formed makeup brush.

Described above are only preferred embodiments of the present disclosure, which are not intended to limit the disclosure. Under the sprits of this application, any equivalent replacements or direct/indirect application in other arts by utilizing the specification and accompanying drawings of this application shall fall within the scope of this application defined by the appended claims.

## Claims

1. A glue-free integrally-formed makeup brush, comprising:
a handle; and
a brush head assembly;
**characterized in that** the brush head assembly and the handle are integrally formed through injection molding;
the brush head assembly comprises a bristle cluster, a sleeve and a plug; a root of the bristle cluster is circumferentially provided with at least two protrusions spaced apart from each other; a first groove is provided between adjacent two of the at least two protrusions; and a first end of the sleeve is connected with the handle, and an inner wall of a second end of the sleeve is provided with an annular boss;
an end surface of the annular boss facing towards the handle is circumferentially provided with at least two bearing bosses spaced apart from each other, and a second groove is provided between adjacent two of the at least two bearing bosses; and the at least two protrusions are engaged with the second groove, and the at least two bearing bosses are engaged with the first groove; and
the plug is embedded in the sleeve, and is in zero-clearance fit with the sleeve; and the at least two protrusions are clamped between the plug and the annular boss.

2. The makeup brush according to claim 1, **characterized in that** the at least two bearing bosses have equal height along an axial direction of the sleeve.

3. The makeup brush according to claim 2, **characterized in that** a circumferential length of the second groove is larger than that of each of the at least two bearing bosses; and a circumferential length of each of the at least two protrusions is larger than that of the first groove.

4. The makeup brush according to claim 1, **characterized in that** the number of the second groove is four; the number of the at least two bearing bosses is four; the number of the at least two protrusions is four; and the number of the first groove is four.

5. The makeup brush according to claim 1, **characterized in that** an end of the plug facing towards the handle is provided with a buffer cone; an external diameter of a bottom of the buffer cone is smaller than a diameter of the plug; a buffer chamber is formed between the buffer cone and an inner wall of the sleeve; and an end of the handle is configured to extend into the buffer chamber.

6. The makeup brush according to claim 5, **characterized in that** the buffer cone is configured to extend out of the sleeve.

7. The makeup brush according to claim 5, **characterized in that** a top of the buffer cone is arched.

8. A method for preparing the makeup brush of any one of claims 1-7, comprising:
(S1) inserting the bristle cluster into the sleeve from an end of the sleeve away from the annular boss;
(S2) embedding the plug into the sleeve, such that the plug clamps the bristle cluster in the sleeve to form the brush head assembly;
(S3) placing the brush head assembly into a first mold;
(S4) clamping the first mold and a second mold together followed by injection molding to form the handle, such that the handle and the brush head assembly are integrally formed;
(S5) separating the first mold from the second mold to obtain the makeup brush.

9. The method of claim 8, **characterized in that** step (S1) comprises:
wrapping a sheet with a tip around the bristle cluster, with the root of the bristle cluster away from the tip of the sheet;
aligning the tip of the sheet with the end of the sleeve away from the annular boss, so that the tip of the sheet enters the sleeve from the end of the sleeve away from the annular boss to drive the bristle cluster to extend out from the annular boss; and
removing the sheet, and adjusting the bristle cluster, so that the at least two protrusions are engaged with the second groove, and the at least two bearing bosses are engaged with the first groove.

10. The method of claim 9, **characterized in that** step (S3) comprises:
placing the brush head assembly into a clamp; and
placing the clamp into the first mold;
wherein the clamp is provided with a cylindrical cavity for accommodating the brush head assembly, and a retaining ring is provided in the cylindrical cavity to support the brush head assembly; and
the brush head assembly is placed into the clamp through steps of:
wrapping the sheet around the bristle cluster with the root of the bristle cluster away from the tip of the sheet; and
aligning the tip of the sheet an end of the cylindrical cavity such that the tip of the sheet enters the clamp to drive the bristle cluster to extend from one side of the retaining ring to another side of the retaining ring, and the annular boss abuts against the retaining ring.

## Amended claims

### Amended claims in accordance with Rule 137(2) EPC.

1. A glue-free integrally-formed makeup brush (100), comprising:
a handle (1); and
a brush head assembly (2);
**characterized in that** the brush head assembly (2) and the handle (1) are integrally formed through injection molding;
the brush head assembly (2) comprises a bristle cluster (3), a sleeve (5) and a plug (6); a root (31) of the bristle cluster (3) is circumferentially provided with at least two protrusions (4) spaced apart from each other; a first groove (41) is provided between adjacent two of the at least two protrusions (4); and a first end of the sleeve (5) is connected with the handle (1), and an inner wall of a second end of the sleeve (5) is provided with an annular boss (51);
an end surface of the annular boss (51) facing towards the handle (1) is circumferentially provided with at least two bearing bosses (52) spaced apart from each other, and a second groove (53) is provided between adjacent two of the at least two bearing bosses (52); and the at least two protrusions (4) are engaged with the second groove (53), and the at least two bearing bosses (52) are engaged with the first groove (41); and
the plug (6) is embedded in the sleeve (5), and is in zero-clearance fit with the sleeve (5); and the at least two protrusions (4) are clamped between the plug (6) and the annular boss (51).

2. The makeup brush (100) according to claim 1, **characterized in that** the at least two bearing bosses (52) have equal height along an axial direction of the sleeve (5).

3. The makeup brush (100) according to claim 2, **characterized in that** a circumferential length of the second groove (53) is larger than that of each of the at least two bearing bosses (52); and a circumferential length of each of the at least two protrusions (4) is larger than that of the first groove (41).

4. The makeup brush (100) according to claim 1, **characterized in that** the number of the second groove (53) is four; the number of the at least two bearing bosses (52) is four; the number of the at least two protrusions (4) is four; and the number of the first groove (41) is four.

5. The makeup brush (100) according to claim 1, **characterized in that** an end of the plug (6) facing towards the handle (1) is provided with a buffer cone (7); an external diameter of a bottom of the buffer cone (72) is smaller than a diameter of the plug (6); a buffer chamber (54) is formed between the buffer cone (7) and an inner wall of the sleeve (5); and an end of the handle (1) is configured to extend into the buffer chamber (54).

6. The makeup brush (100) according to claim 5, **characterized in that** the buffer cone (7) is configured to extend out of the sleeve (5).

7. The makeup brush (100) according to claim 5, **characterized in that** a top (71) of the buffer cone (7) is arched.

8. A method for preparing the makeup brush (100) of any one of claims 1-7, comprising:
(S1) inserting the bristle cluster (3) into the sleeve (5) from an end of the sleeve (5) away from the annular boss (51);
(S2) embedding the plug (6) into the sleeve (5), such that the plug (6) clamps the bristle cluster (3) in the sleeve (5) to form the brush head assembly (2);
(S3) placing the brush head assembly (2) into a first mold;
(S4) clamping the first mold and a second mold together followed by injection molding to form the handle (1), such that the handle (1) and the brush head assembly (2) are integrally formed through the injection molding;
(S5) separating the first mold from the second mold to obtain the makeup brush (100).

9. The method of claim 8, **characterized in that** step (S1) comprises:
wrapping a sheet with a tip around the bristle cluster (3), with the root (31) of the bristle cluster (3) away from the tip of the sheet;
aligning the tip of the sheet with the end of the sleeve (5) away from the annular boss (51), so that the tip of the sheet enters the sleeve (5) from the end of the sleeve (5) away from the annular boss (51) to drive the bristle cluster (3) to extend out from the annular boss (51); and
removing the sheet, and adjusting the bristle cluster (3), so that the at least two protrusions (4) are engaged with the second groove (53), and the at least two bearing bosses (52) are engaged with the first groove (41).

10. The method of claim 9, **characterized in that** step (S3) comprises:
placing the brush head assembly (2) into a clamp (11); and
placing the clamp (11) into the first mold;
wherein the clamp (11) is provided with a cylindrical cavity (13) for accommodating the brush head assembly (2), and a retaining ring (12) is provided in the cylindrical cavity (13) to support the brush head assembly (2); and
the brush head assembly (2) is placed into the clamp (11) through steps of:
wrapping the sheet around the bristle cluster (3) with the root (31) of the bristle cluster (3) away from the tip of the sheet; and
aligning the tip of the sheet an end of the cylindrical cavity (13) such that the tip of the sheet enters the clamp (11) to drive the bristle cluster (3) to extend from one side of the retaining ring (12) to another side of the retaining ring (12), and the annular boss (51) abuts against the retaining ring (12).
